# EUROPÄISCHE PATENTSCHRIFT

(11) **EP 3 025 073 B1**
(45) Veröffentlichungstag und Bekanntmachung des Hinweises auf die Patenterteilung: **29.07.2020**
(21) Anmeldenummer: 14733590.5
(22) Anmeldetag: 23.06.2014
(51) Int. Cl.: F16H 3/66

(54) **GETRIEBE FÜR EIN KRAFTFAHRZEUG**
TRANSMISSION FOR A MOTOR VEHICLE
BOÎTE DE VITESSES POUR VÉHICULE À MOTEUR

(30) Priorität: 26.07.2013 DE 102013214618
(43) Veröffentlichungstag der Anmeldung: 01.06.2016
(73) Patentinhaber: ZF Friedrichshafen AG, 88046 Friedrichshafen (DE)
(72) Erfinder: BECK, Stefan, 88097 Eriskirch (DE); SIBLA, Christian, 88045 Friedrichshafen (DE)
(74) Vertreter: ZF Friedrichshafen AG
(86) Internationale Anmeldenummer: PCT/EP2014/063090
(87) Internationale Veröffentlichungsnummer: WO 2015/010835

(56) Entgegenhaltungen:
- DE-A1-102005 032 881
- DE-A1-102013 209 547
- US-A1- 2009 192 009

## Beschreibung

Die Erfindung betrifft ein Getriebe, insbesondere ein Mehrstufengetriebe, für ein Kraftfahrzeug, wobei das Getriebe ein Gehäuse, eine Antriebswelle, eine Antriebswelle und zumindest vier Planetenradsätze umfasst, wobei die Planetenradsätze jeweils ein Sonnenrad, einen Planeten, einen Planetenträger und ein Hohlrad aufweisen, sowie mehrere Schaltelemente in Form von zumindest vier Kupplungen und zumindest zwei Bremsen.

Derartige Getriebe sind beispielsweise aus der WO 2012/052284 A1 bekannt. In der WO 2012/0522841 ist ein Mehrstufengetriebe mit sechs Vorwärtsgängen und einem Rückwärtsgang gezeigt, welches vier Planetenradsätze, sieben drehbare Wellen und fünf Schaltelemente umfasst, wobei das Sonnenrad des ersten Planetenradsatzes mit der sechsten Welle verbunden ist, die über eine erste Bremse an das Gehäuse des Getriebe ankoppelbar ist, wobei der Steg des ersten Planetenradsätze mit der fünften Welle verbunden ist, die mit dem Sonnenrad des zweiten Planetenradsatzes verbunden und über eine zweite Bremse an das Gehäuse ankoppelbar ist, wobei die Antriebswelle mit dem Hohlrad des ersten Planetenradsatzes und dem Sonnenrad des dritten Planetenradsatzes verbunden und über eine Kupplung mit der mit dem Steg des dritten Planetenradsatzes und dem Hohlrad des vierten Planetenradsatzes verbundenen siebten Welle lösbar verbindbar ist, wobei die vierte Welle mit dem Hohlrad des dritten Planetenradsatzes und dem Steg des zweiten Planetenradsatzes verbunden und über eine dritte Bremse an das Gehäuse ankoppelbar ist, wobei die Antriebswelle mit dem Hohlrad des zweiten Planetenradsatzes und dem Steg des vierten Planetenradsatzes verbunden ist und wobei das Sonnenrad des vierten Planetenradsatzes mit der dritten Welle verbunden ist, die über eine vierte Bremse an das Gehäuse ankoppelbar ist.

Aus der gattungsgemäßen US 2009/0192009 und der DE 10 2005 032 881 sind auch Mehrstufengetriebe mit zehn Vorwärtsgängen und einem Rückwärtsgang bekannt, welche vier Planetenradsätze, vier Kupplungen und 2 Bremsen umfassen.

Nachteilig dabei ist, dass bei Getrieben mit einer hohen Anzahl von Gängen der Bauaufwand erheblich zunimmt. Eine höhere Anzahl von Schaltelementen, Lagern, etc vermindert dabei den Vorteil einer hohen Gangzahl. Sind eine hohe Anzahl offener, schleppender Kupplungen bei der Darstellung von Gängen vorhanden, führt dies zu hohen internen Wirkungsgradverlusten.

Eine Aufgabe der vorliegenden Erfindung ist es, ein alternatives Getriebe für ein Kraftfahrzeug anzugeben. Eine weitere mögliche Aufgabe der vorliegenden Erfindung ist es, ein Getriebe für ein Kraftfahrzeug zur Verfügung zu stellen, welches eine hohe Anzahl von Gängen und einen geringen Bauaufwand und damit niedrigere Kosten und niedrigeres Gewicht aufweist. Darüber hinaus ist es eine mögliche Aufgabe eine gute Übersetzungsreihe durch das Getriebe, niedrige Absolut- und Relativdrehzahlen, sowie niedrige Planetenradsatz- und Schaltelementmomente beim Getriebe zur Verfügung zu stellen. Eine weitere mögliche Aufgabe der vorliegenden Erfindung ist es, gute Verzahnungswirkungsgrade und geringe Schleppmomente zur Verfügung zu stellen.

Zumindest eine der Aufgaben wird gelöst durch ein Getriebe gemäß Anspruch 1, einem Verfahren gemäß Anspruch 8 und einer Verwendung gemäß Anspruch 10.

Vorteilhafte Ausführungsformen finden sich in den Unteransprüchen.

Insbesondere kann zumindest eine der obenstehenden Aufgaben zumindest teilweise durch ein Getriebe, insbesondere ein Mehrstufengetriebe, für ein Kraftfahrzeug, gelöst werden, wobei das Getriebe ein Gehäuse, eine Antriebswelle, eine Abtriebswelle und zumindest vier Planetenradsätze aufweist, und die Planetenradsätze zumindest ein Sonnenrad, zumindest einen Planeten, zumindest einen Planetenträger und zumindest ein Hohlrad aufweisen. Auch weist das Getriebe mehrere Schaltelemente in Form von zumindest vier Kupplungen und zumindest zwei Bremsen auf, wobei
- die Antriebswelle mit dem Planetenträger des zweiten Planetenradsatz verbunden ist,
- die Antriebswelle über die erste Kupplung mit dem Sonnenrad des vierten Planetenradsatzes und über die erste und die dritte Kupplung mit dem Hohlrad des dritten Planetenradsatzes und über die erste, die dritte und die zweite Kupplung mit dem Sonnenrad des dritten Planetenradsatzes und dem Hohlrad des zweiten Planetenradsatzes verbindbar ist,
- das Sonnenrad des ersten Planetenradsatzes mit dem Sonnenrad des zweiten Planetenradsatzes und der ersten Bremse verbunden ist,
- der Planetenträger des ersten Planetenradsatzes mit dem Hohlrad des vierten Planetenradsatzes verbunden ist und über die vierte Kupplung mit dem Planetenträger des dritten Planetenradsatzes verbindbar ist,
- das Hohlrad des ersten Planetenradsatzes mit einer zweiten Bremse verbunden ist,
- der Planetenträger des vierten Planetenradsatzes mit der Abtriebswelle verbunden ist.

Insbesondere kann das Getriebe mehr als vier Planetenradsätze oder zuzüglich zu den Planetenradsätzen weitere Radsätze wie Stirnradsätze oder Ketten etc. aufweisen. Bevorzugt weist das Getriebe jedoch als Radsätze nur Planetenradsätze auf. Weiter bevorzugt weist das Getriebe genau vier Planetenradsätze auf.

Zumindest einer der Aufgaben kann auch gelöst werden durch ein Verfahren zum Betreiben eines Getriebes wie es oben stehend beschrieben worden ist, gelöst werden. Insbesondere kann zumindest eine der Aufgaben zumindest teilweise durch ein Verfahren zum Betreiben eines Getriebes nach einem der Ansprüche 1-7 gelöst werden, wobei
- ein erster Gang mittels geschlossener erster Bremse, geschlossener zweiter Bremse, geschlossener erster Kupplung, geschlossener dritter Kupplung gebildet wird und/oder mittels geschlossener erster Bremse, geschlossener zweiter Bremse, geschlossener erster Kupplung und geschlossener vierter Kupplung gebildet wird und/oder mittels geschlossener erster Bremse, geschlossener zweiter Bremse, geschlossener erster Kupplung und geschlossener zweiter Kupplung gebildet wird,
- ein zweiter Gang mittels geschlossener erster Bremse, geschlossener zweiter Bremse, geschlossener zweiter Kupplung und geschlossener dritter Kupplung gebildet wird,
- ein dritter Gang mittels geschlossener zweiter Bremse, geschlossener erster Kupplung, geschlossener zweiter Kupplung und geschlossener dritter Kupplung gebildet wird,
- ein vierter Gang mittels geschlossener zweiter Bremse, geschlossener zweiter Kupplung, geschlossener dritter Kupplung und geschlossener vierter Kupplung gebildet wird,
- einen fünfter Gang mittels geschlossener zweiter Bremse, geschlossener erster Kupplung, geschlossener zweiter Kupplung und geschlossener vierter Kupplung gebildet wird,
- ein sechster Gang mittels geschlossener zweiter Bremse, geschlossener erster Kupplung, geschlossener dritter Kupplung und geschlossener vierter Kupplung gebildet wird,
- ein siebter Gang mittels geschlossener erster Kupplung, geschlossener zweiter Kupplung, geschlossener dritter Kupplung und geschlossener vierter Kupplung gebildet wird,
- einen achter Gang mittels geschlossener erster Bremse, geschlossener erster Kupplung, geschlossener dritter Kupplung und geschlossener vierter Kupplung gebildet wird,
- ein neunter Gang mittels geschlossener erster Bremse, geschlossener erster Kupplung, geschlossener zweiter Kupplung und geschlossener vierter Kupplung gebildet wird,
- ein zehnter Gang mittels geschlossener erster Bremse, geschlossener zweiter Kupplung, geschlossener dritter Kupplung, geschlossener vierter Kupplung gebildet wird,
- einen Rückwärtsgang mittels geschlossener erster Bremse, geschlossener zweiter Bremse, geschlossener dritter Kupplung und geschlossener vierter Kupplung gebildet wird.

Durch das Verfahren und/ oder das Getriebe kann eine hohe Anzahl von Gängen, ein geringer Bauaufwand, eine gute Übersetzung bei niedrigen Absolut- und Relativdrehzahlen zur Verfügung gestellt werden. Weitere Vorteile sind auch die Ermöglichung niedriger Planetenradsatz- und Schaltelementmomente, gute Verzahnungswirkungsgrade und geringer Schleppmomente.

Über die Antriebswelle einer Antriebseinheit, wie einem Fahrzeugantrieb, wird besonders bevorzugt ein Drehmoment bzw. eine Rotationsbewegung, beispielsweise eines Verbrennungsmotors, in das Getriebe eingeleitet. In bevorzugter Weise befindet sich zwischen der Abtriebswelle und der Antriebswelle des Getriebes ein Anfahrelement, wie etwa ein hydrodynamischer Drehmomentwandler oder eine Strömungskupplung.

Unter einer Welle ist nachfolgend nicht ausschließlich ein beispielsweise zylindrisches, drehbar gelagertes Maschinenelement zur Übertragung von Drehmomenten zu verstehen, sondern vielmehr sind hierunter auch allgemein Verbindungselemente zu verstehen, die einzelne Bauteile oder Elemente miteinander verbinden, insbesondere Verbindungselemente, die mehrere Elemente drehfest miteinander verbinden.

Zwei Elemente werden insbesondere als miteinander verbunden bezeichnet, wenn zwischen den Elementen eine feste, insbesondere drehfeste Verbindung, besteht. Insbesondere drehen solche verbundenen Elemente mit der gleichen Drehzahl.

Die verschiedenen Bauteile und Elemente der genannten Erfindung können dabei über eine Welle bzw. ein Verbindungselement, aber auch direkt, beispielsweise mittels einer Schweiß-, Press- oder einer sonstigen Verbindung miteinander verbunden sein.

Zwei Elemente werden als verbindbar bezeichnet, wenn zwischen diesen Elementen eine lösbare Verbindung besteht. Insbesondere drehen solche Elemente mit der gleichen Drehzahl, wenn die Verbindung besteht.

Unter einer Kupplung ist vorzugsweise in der Beschreibung, insbesondere in den Ansprüchen, ein Schaltelement zu verstehen, welches je nach Betätigungszustand, eine Relativbewegung zwischen zwei Bauteilen zulässt oder eine Verbindung zu Übertragung eines Drehmoments darstellt. Unter einer Relativbewegung ist beispielsweise eine Rotation zweier Bauteile zu verstehen, wobei die Drehzahl des ersten Bauteils von der Drehzahl des zweiten Bauteils abweicht. Darüber hinaus ist auch eine Rotation nur eines der beiden Bauteile denkbar, während das andere Bauteil stillsteht oder in entgegengesetzte Richtung rotiert.

Unter einer nicht betätigten Kupplung wird eine geöffnete Kupplung verstanden. Dies bedeutet, dass eine Relativbewegung zwischen den beiden Bauteilen möglich ist. Bei betätigter bzw. geschlossener Kupplung rotieren die beiden Bauteile dementsprechend mit gleicher Drehzahl in derselben Richtung.

Unter einer Bremse ist vorzugsweise in der Beschreibung, insbesondere in der Ansprüchen, ein Schaltelement zu verstehen, welches auf einer Seite mit einem feststehenden Bauteil, beispielsweise einem Gehäuse, und auf einer anderen Seite mit einem rotierbaren Bauteil verbunden ist.

Unter einer nicht betätigten Bremse ist eine geöffnete Bremse zu verstehen. Dies bedeutet, dass das rotierbare Bauteil rotierbar ist, d.h., die Bremse bevorzugt keinen Einfluss auf die Drehzahl des rotierbaren Bauteils nimmt. Bei betätigter bzw. geschlossener Bremse erfolgt eine Reduzierung der Drehzahl des rotierbaren Bauteils bis hin zum Stillstand, d.h., dass eine feste Verbindung zwischen rotierbaren Bauteil und feststehenden Bauteil herstellbar ist.

Grundsätzlich ist auch eine Verwendung von Schaltelementen möglich, die im nicht betätigten Zustand geschlossen und in dem betätigten Zustand geöffnet sind. Dementsprechend sind die Zuordnungen zwischen Funktion und Schaltzustand der oben beschriebenen Schaltzustände in umgekehrter Weise zu verstehen. Bei den nachfolgenden Ausführungsbeispielen anhand der Figuren, wird zunächst eine Anordnung zugrunde gelegt, in der ein betätigtes Schaltelement geschlossen und ein nicht betätigtes Schaltelement geöffnet ist.

Unter einem Planetenradsatz wird eine Vorrichtung verstanden, welche zumindest ein Sonnenrad und zumindest ein Hohlrad und genau einen Planetenträger aufweist, wobei an dem Planetenträger zumindest ein, bevorzugt mehrere Planeten rotierbar gelagert sind, welche in der Verzahnung des Hohlrades und/oder des Sonnenrades kämmen. Nachfolgend beschreibt ein Minusplanetenradsatz einen Planetenradsatz mit einem Planetenträger an dem die Planetenräder drehbar gelagert sind, wobei die Verzahnung zumindest eines der Planetenräder, bevorzugt aller Planetenräder, sowohl mit der Verzahnung des Sonnenrades als auch mit der Verzahnung des Hohlrades kämmt, wodurch das Hohlrad und das Sonnenrad in entgegengesetzte Drehrichtungen rotieren, wenn das Sonnenrad bei feststehendem Planetenträger rotiert.

Ein Plus- Planetenradsatzes unterscheidet sich zu dem gerade beschriebenen MinusPlanetenradsatz dahingegen, dass der Plus-Planetenradsatz innere und äußere Planetenräder aufweist, welche drehbar an dem Planetenträger gelagert sind. Die Verzahnung der inneren Planetenräder kämmt dabei einerseits mit der Verzahnung des Sonnenrad und anderseits mit der Verzahnung der äußeren Planetenräder. Die Verzahnung der äußeren Planetenräder kämmt mit der Verzahnung der inneren Planetenräder und mit der Verzahnung des Hohlrades. Dies hat zur Folge dass bei feststehendem Planetenträger das Hohlrad und das Sonnenrad mit der gleichen Drehrichtung rotieren.

Durch die Verwendung von Planetenradsätze können besonders kompakte Getriebe realisiert werden, wodurch eine große Freiheit bei der Anordnung des Getriebes im Fahrzeug erreicht wird.

Unter den Elementen eines Planetenradsatzes werden insbesondere das Sonnenrad, das Hohlrad, der Planetenträger respektive Steg und die Planetenräder respektive die Planeten des Planetenradsatzes verstanden.

Besonders bevorzugt sind die Schaltelemente selektiv, also einzeln und bedarfsgerecht betätigbar, wodurch unterschiedliche Gänge durch unterschiedliche Übersetzungsverhältnisse zwischen der Antriebswelle und der Antriebswelle des Getriebes realisierbar sind. Je höher die Anzahl der Gänge, desto feiner kann eine Gangabstufung bei einer großen Getriebespreizung realisiert werden und somit kann beispielsweise ein Verbrennungsmotor eines Kraftfahrzeugs in einem optimalen Drehzahlbereich und damit möglichst wirtschaftlich betrieben werden. Gleichzeitig trägt dies zu einer Erhöhung des Wirkungsgrades bei, da der Verbrennungsmotor bevorzugt auf einem niedrigen Drehzahlniveau betrieben werden kann. So wird beispielsweise auch Lärmemission reduziert, welche durch den Betrieb des Verbrennungsmotors entsteht.

Das vorgestellte Getriebe ist sowohl für eine Längsanordnung als auch für eine Quer-Anordnung geeignet.

Unter dem Begriff der Quer-Anordnung ist eine Anordnung zu verstehen, bei der die Abtriebswelle der Antriebseinheit, beispielsweise des Verbrennungsmotors, quer zu einer Fahrtrichtung und/oder der Hauptfahrzeugachse oder parallel dazu in einem Kraftfahrzeug ist. Das hier vorgestellte Getriebe ist weiter für eine "Front-Quer- Anordnung" geeignet, welche sich dadurch auszeichnet, dass die Abtriebswelle der Antriebseinheit quer zur Fahrtrichtung angeordnet ist und die Räder einer vorderen Achse durch die Antriebseinheit antreibbar sind. Da bei Front-Quer-Anordnungen das Getriebe zumeist im oder in unmittelbarer Nähe des Motorraums angeordnet ist, ist es notwendig, dass das Getriebe besonders kompakt auszubilden.

Auch ist das Getriebe für eine Längsanordnung geeignet. Eine Längsanordnung zeichnet sich dadurch aus, dass die Abtriebswelle der Antriebseinheit sich entlang der Fahrtrichtung und/oder der Fahrzeughauptachse oder parallel dazu erstreckt. Insbesondere ist das Getriebe für eine Hinten-Längsanordnung geeignet, bei der sich die Abtriebswelle der Antriebseinheit entlang der Fahrzeughauptachse oder parallel dazu erstreckt und die hinteren Räder mit der Antriebseinheit mittels dem Getriebe verbunden sind.

Weiterhin können die Schaltelemente derart ausgebildet sein, dass eine Änderung eines Schaltzustandes der Schaltelemente Energie, nicht jedoch für das Beibehalten des Schaltzustands selbst benötigt wird.

Hierzu eignen sich in besonderer Weise bedarfsgerecht betätigbare Schaltelemente, wie beispielsweise elektromechanische Schaltelemente oder elektromagnetische Schaltelement. Sie zeichnen sich, insbesondere im Vergleich zu konventionellen hydraulisch betätigbaren Schaltelementen, durch einen besonders geringen und effizienten Energiebedarf auf, da sie nahezu verlustfrei betreibbar sind. Darüber hinaus kann in vorteilhafter Weise darauf verzichtet werden, permanent einen Druck für die Betätigung der beispielsweise konventionellen hydraulischen Schaltelemente vorzuhalten, bzw. das jeweilige Schaltelement in geschalteten Zustand permanent mit dem erforderlichen Hydraulikdruck zu beaufschlagen. Hierdurch können beispielsweise weitere Bauteile wie eine Hydraulikpumpe entfallen, soweit diese ausschließlich der Ansteuerung und Versorgung der konventionellen hydraulisch betätigbaren Schaltelemente dienen. Erfolgt die Versorgung weiterer Bauteile mit Schmiermitteln nicht über eine separate Schmiermittelpumpe, sondern über die gleiche Hydraulikpumpe, so kann diese zumindest kleiner dimensioniert werden. Auch eventuell auftretende Undichtigkeiten an den Übergabestellen des Ölkreislaufes, insbesondere bei rotierenden Bauteilen, entfallen Dies trägt besonders bevorzugt ebenfalls zur Effizienzsteigerung des Getriebes in Form eines höheren Wirkungsgrades bei. Bei der Verwendung von bedarfsgerecht betätigbaren Schaltelement der oben genannten Art ist es besonders sinnvoll, wenn diese von außen gut zugänglich sind. Dies hat unter anderem den Vorteil, dass die benötigte Schaltenergie den Schaltelementen gut zugeführt werden kann. Daher sind Schaltelemente bevorzugt so angeordnet, dass sie von außen gut zugänglich sind. Von außen gut zugänglich bedeutet im Sinne der Schaltelemente, dass zwischen dem Gehäuse des Getriebes und dem Schaltelement keine weitere Bauteile angeordnet sind oder dass die Schaltelemente an der Antriebswelle oder an der Abtriebswelle angeordnet sind.

Unter dem Begriff "Bindbarkeit" ist vorzugsweise in der Beschreibung, insbesondere in den Ansprüchen zu verstehen, dass bei unterschiedlicher geometrischer Lage die gleiche Anbindung von Schnittstellen gewährleistet ist, ohne dass sich einzelne Verbindungselemente oder Wellen kreuzen.

Unter dem Begriff "Standübersetzung" ist diejenige Übersetzung zu verstehen, die durch das Übersetzungsverhältnis zwischen Sonnenrad und Hohlrad des jeweiligen Planetenradsatzes realisiert ist, wenn der Planetenträger respektive Steg feststeht.

Vorteilhafter Weise sind die Planetenradsätze im Getriebe hintereinander angeordnet. Dies ermöglicht eine einfache Herstellung sowie eine einfache Zugänglichkeit der Planetenradsätze im Falle einer Wartung. Bevorzugt sind dabei die Planetenradsätze geometrisch in der Reihenfolge erster Planetenradsatz, zweiter Planetenradsatz, dritter Planetenradsatz, vierter Planetenradsatz angeordnet.

Bevorzugt sind die Rotationsachsen der Sonnenräder, Hohlräder und Planetenträger der Planetenradsätze untereinander parallel.

Zweckmäßigerweise sind alle Planetenradsätze Minusplanetenradsätze. Auf diese Weise können das Hohlrad und das Sonnenrad in jeweils entgegengesetzte Drehrichtungen des entsprechenden Planetenradsatzes rotieren, wenn das Sonnenrad bei feststehendem Planetenträger rotiert. Außerdem weisen Minusplanetenradsätze im Vergleich zu den Plusplanetenradsätzen weniger Bauteile auf, was zu einem Gewichts-, Wirkungsgrad- und Wartungsvorteil führen kann.

Vorteilhafterweise ist der Betrag der Standübersetzung der ersten, des zweiten und des dritten Planetenradsatzes ≤ 2. Insbesondere ist der Betrag der Standübersetzung des ersten Planetenradsatzes 2, des zweiten Planetenradsatzes 1, 8, des dritten Planetenradsatzes 1, 8 und des vierten Planetenradsatzes 3, 6. Auch können ein oder mehrere der Planetenradsätze als Plusplanetenradsätze ausgebildet werden, dies gilt insbesondere, wenn die Steg- und die Hohlradanbindung getauscht werden und der Betrag der Standübersetzung um 1 erhöht wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der Erfindung sind in den Zeichnungen dargestellt und werden in der nachfolgenden Beschreibung näher erläutert, wobei sich gleiche Bezugszeichen auf gleiche oder ähnlich funktionale Bauteile oder Elemente beziehen. Dabei zeigen jeweils in schematischer Form,
- Fig. 1: ein Getriebe gemäß einer Ausführungsform der vorliegenden Erfindung;
- Fig. 2: eine Schaltmatrix für ein Getriebe gemäß Fig. 1.

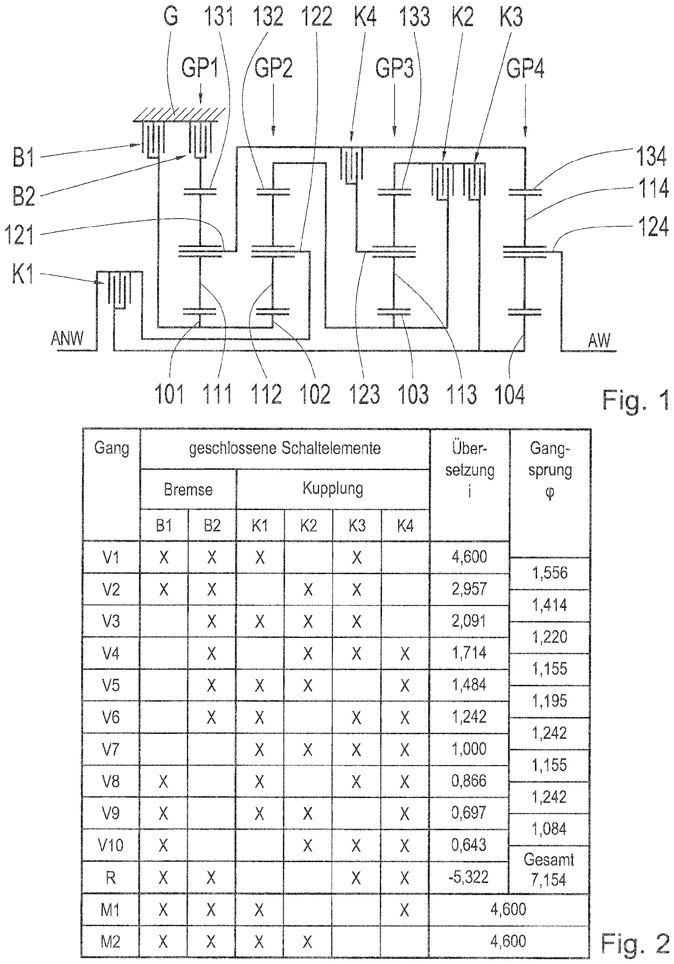

Fig. 1 zeigt ein Getriebe gemäß einer Ausführungsform der vorliegenden Erfindung.

In Fig. 1 zeigt ein Mehrstufengetriebe 1. Das Mehrstufengetriebe 1 weist sechs Schaltelemente in Form von vier Kupplungen K1, K2, K3, K4 sowie zwei Bremsen B1, B2 auf. Mittels der vier Kupplungen K1, K2, K3, K4 kann die Antriebsseite mit der Abtriebsseite des Getriebes 1 zur Übertragung von Kraft und Drehmomenten über Wellen, Schaltelemente und/oder Planetenradsätze gekoppelt bzw. verbunden werden.

Im Folgenden wird zunächst der allgemeine Aufbau des ersten Planetenradsatzes GP1, des zweiten Planetenradsatzes GP2, des dritten Planetenradsatzes GP3 sowie des vierten Planetenradsatzes GP4 beschrieben. Die vorstehend genannten Planetenradsätze GP1, GP2, GP3 und GP4 sind in üblicher Weise aufgebaut und weisen jeweils ein zentrales Sonnenrad 101, 102, 103, 104 auf, welches mit zumindest einem Planeten 111, 112, 113, 114 zur Übertragung von Kraft und Drehmomenten zusammenwirkt. Der Planet 111, 112, 113, 114 ist an einem Steg/Planetenträger 121, 122, 123, 124 drehbar gelagert. Auf der radialen Außenseite des Planeten 111, 112, 113, 114 ist ein Hohlrad 131, 132, 133, 134 angeordnet, in der der jeweilige Planet 111, 112, 113, 114 zur Übertragung von Kraft und Drehmomenten eingreift. Der Steg/Planetenträger 121, 122, 123, 124 ist weiterhin jeweils mit einer Welle verbunden.

In Fig. 1 ist die Antriebswelle ANW mit dem Steg 122 des zweiten Planetenradsatzes GP2 verbunden und über die erste Kupplung K1 mit dem Sonnenrad 104 des vierten Planetenradsatzes GP4 verbindbar. Auch ist die Antriebswelle ANW über die erste Kupplung K1 und die dritte Kupplung K3 mit dem Hohlrad 133 des dritten Planetenradsatzes GP3 und über die erste Kupplung K1, die dritte Kupplung K3 und die zweite Kupplung K2 mit dem Sonnenrad 103 des dritten Planetenradsatzes GP3 und dem Hohlrad 132 des zweiten Planetenradsatzes GP2 verbindbar. Die Abtriebswelle AW ist mit dem Steg 124 des vierten Planetenradsatzes GP4 verbunden. Das Hohlrad 131 des ersten Planetenradsatzes GP1 ist über die zweite Bremse B2 mit dem Gehäuse G verbindbar. Das Sonnenrad 101 des ersten Planetenradsatzes GP1 ist mit dem Sonnenrad 102 des zweiten Planetenradsatzes GP2 verbunden und über die erste Bremse B1 mit dem Gehäuse G verbindbar. Der Steg 121 des ersten Planetenradsatzes GP1 ist mit dem Hohlrad 134 des vierten Planetenradsatzes GP4 verbunden und über die vierte Kupplung K4 mit dem Steg 123 des dritten Planetenradsatzes GP3 verbindbar. Das Hohlrad des zweiten Planetenradsatzes 132 ist mit dem Sonnenrad 103 des dritten Planetenradsatzes GP3 verbunden.

Fig. 2 zeigt eine Schaltmatrix für ein Getriebe gemäß Fig. 1.

Senkrecht nach unten sind zunächst die zehn Vorwärtsgangstufen V1 - V10 dargestellt sowie eine Rückwärtsgangstufe, bezeichnet mit R. Außerdem sind zwei weitere Gänge M1 und M2 dargestellt, die in der Übersetzung dem ersten Gang V1 entsprechen. Waagrecht sind jeweils Schaltelemente dargestellt, wobei zunächst die beiden Bremsen B1, B2 und anschließend die vier Kupplungen K1, K2, K3 und K4 dargestellt sind. Weiterhin ist das jeweilige Übersetzungsverhältnis i sowie der entsprechende Gangsprung ϕ zwischen zwei aufeinanderfolgenden Gängen dargestellt. Die in der Schaltmatrix freigelassenen Einträge, also beispielsweise bei der Vorwärtsgangstufe V1, die zweite Kupplung K2 und die vierte Kupplung K4 zeigen an, dass das entsprechende Schaltelement bzw. die Bremse bzw. die Kupplung geöffnet ist, d. h. dass das Schaltelement hierbei keine Kräfte bzw. kein Drehmoment von dem an das Schaltelement angeschlossenen oder mit diesem verbundenen jeweiligen Wellen oder Elementen des Getriebes überträgt. Ein mit einem Kreuz versehener Eintrag in der Schaltmatrix bezeichnet ein entsprechend betätigtes bzw. geschlossenes Schaltelement, also in der Schaltmatrix beispielsweise bei der Vorwärtsgangstufe V2 bei der ersten Bremse B1, der zweiten Bremse B2 sowie der zweiten Kupplung K2 und der dritten Kupplung K3.

Um den ersten Vorwärtsgang mittels des Getriebes 1 gemäß Fig. 1 darzustellen, sind die erste Bremse B1 und die zweite Bremse B2 sowie die erste Kupplung K1 und die dritte Kupplung K3 geschlossen. Die zweite Kupplung K2 und die vierte Kupplung K4 sind geöffnet. Das Übersetzungsverhältnis i beträgt 4,600.

Um den zweiten Vorwärtsgang V2 darzustellen, sind die erste Bremse B1, die zweite Bremse B2 sowie die zweite Kupplung K2 und die dritte Kupplung K3 geschlossen. Die erste Kupplung K1 und die vierte Kupplung K4 sind offen. Das Übersetzungsverhältnis i beträgt 2,957. Der Gangsprung zwischen dem ersten Gang V1 und dem zweiten Gang V2 beträgt 1,556.

Um den dritten Vorwärtsgang V3 darzustellen, sind die zweite Bremse B2, die erste Kupplung K1, die zweite Kupplung K2 und die dritte Kupplung K3 geschlossen. Die erste Bremse B1 und die vierte Kupplung K4 sind offen. Das Übersetzungsverhältnis i beträgt 2,091. Der Gangsprung ϕ zwischen dem zweiten Gang V2 und dem dritten Gang V3 beträgt 1,414.

Um den vierten Gang V4 darzustellen, sind die zweite Bremse B2, die zweite Kupplung K2, die dritte Kupplung K3 und die vierte Kupplung K4 geschlossen. Die erste Bremse B1 und die erste Kupplung K1 sind offen. Das Übersetzungsverhältnis beträgt 1,714. Der Gangsprung zwischen dem dritten Gang V3 und dem vierten Gang V4 beträgt 1,220.

Um den fünften Gang V5 darzustellen, sind die zweite Bremse B2, die erste Kupplung K1, die zweite Kupplung K2 und die vierte Kupplung K4 geschlossen. Die erste Bremse B1 und die dritte Kupplung K3 sind offen. Das Übersetzungsverhältnis beträgt 1,484. Der Gangsprung zwischen dem vierten Gang V4 und dem fünften Gang V5 beträgt 1,155.

Um den sechsten Gang V6 darzustellen sind die zweite Bremse B2, die erste Kupplung K1, die dritte Kupplung K3 und die vierte Kupplung K4 geschlossen. Die erste Bremse B1 und die zweite Kupplung K2 sind offen. Das Übersetzungsverhältnis beträgt 1,242. Der Gangsprung zwischen dem fünften Gang V5 und dem sechsten Gang V6 beträgt 1,195.

Um den siebten Gang V7 darzustellen, sind die erste Kupplung K1, die zweite Kupplung K2, die dritte Kupplung K3 und die vierte Kupplung K4 geschlossen. Die erste Bremse B1 und die zweite Bremse B2 sind offen. Das Übersetzungsverhältnis beträgt 1,000. Der Gangsprung zwischen dem sechsten Gang V6 und dem siebten Gang V7 beträgt 1,242.

Um den achten Gang V8 darzustellen sind die erste Bremse B1, die erste Kupplung K1, die dritte Kupplung K3 und die vierte Kupplung K4 geschlossen. Die zweite Bremse B2 und die zweite Kupplung K2 sind offen. Das Übersetzungsverhältnis beträgt 0,866. Der Gangsprung zwischen dem siebten Gang V7 und dem achten Gang V8 beträgt 1,155.

Um den neunten Gang V9 darzustellen sind die erste Bremse B1, die erste Kupplung K1, die zweite Kupplung K2 und die vierte Kupplung K4 geschlossen. Die zweite Bremse B2 und die dritte Kupplung K3 sind geöffnet. Das Übersetzungsverhältnis beträgt 0,697. Der Gangsprung ϕ zwischen dem achten Gang V8 und dem neunten Gang V9 beträgt 1,242.

Um den zehnten Gang V10 darzustellen sind die erste Bremse B1, die zweite Kupplung K2, die dritte Kupplung K3 und die vierte Kupplung K4 geschlossen. Die zweite Bremse B2 und die erste Kupplung K1 sind offen. Das Übersetzungsverhältnis i beträgt 0,643. Der Gangsprung zwischen dem neunten Gang V9 und dem zehnten Gang V10 beträgt 1,084.

Um den Rückwärtsgang darzustellen ist die erste Bremse B1 geschlossen, die zweite Bremse B2 geschlossen, die dritte Kupplung K3 und die vierte Kupplung K4 geschlossen. Die erste Kupplung K1 und die zweite Kupplung K2 sind offen. Das Übersetzungsverhältnis beträgt -5,322.

Alternativ zum ersten Gang V1 ist auch der Gang M1 oder M2 einsetzbar. Um den ersten Alternativgang M1 darzustellen, sind die erste Bremse B1, die zweite Bremse B2, die erste Kupplung K1 und die vierte Kupplung K4 geschlossen. Die zweite Kupplung K2 und die dritte Kupplung K3 sind offen. Das Übersetzungsverhältnis beträgt 4,600.

Um den zweiten Alternativgang M2 darstellen zu können, sind die erste Bremse B1, die zweite Bremse B2, die erste Kupplung K1 und die zweite Kupplung K2 geschlossen. Die dritte Kupplung K3 und die vierte Kupplung K4 sind offen. Das Übersetzungsverhältnis beträgt 4,600.

Um von einem Gang in den benachbarten Gang zu gelangen, muss jeweils ein Schaltelement geöffnet und ein Schaltelement geschlossen werden.

Insgesamt umfasst das Getriebe gemäß den Fig. 1 und 2 vier Planetenradsätze GP1, GP2, GP3, GP4 und sechs Schaltelemente K1, K2, K3, K4, B1, B2, wobei die Schaltelemente in Form von zumindest vier Kupplungen K1, K2, K3, K4 und zumindest zwei Bremsen B1, B2 ausgebildet sind. Pro Gang sind zwei Schaltelemente offen und vier Schaltelemente geschlossen. Es ist keine feste Gehäusekopplung vorhanden. Mittels des Getriebes 1 gemäß der Fig. 1 und 2 sind mindestens zehn Vorwärtsgänge und mindestens ein Rückwärtsgang darstellbar. Als Anfahrelement für das Getriebe 1 können ein hydrodynamischer Drehmomentwandler, eine hydrodynamische Kupplung, eine zusätzliche Anfahrkupplung, eine integrierte Anfahrkupplung oder -bremse und/oder eine zusätzliche elektrische Maschine angeordnet werden. Auf jeder der Wellen des Getriebes 1 ist es möglich eine elektrische Maschine oder sonstige Kraft-/Leistungsquelle anzuordnen. Darüber hinaus kann auf jeder Welle ein Freilauf zum Gehäuse G oder zu einer anderen Welle angeordnet werden. Das Getriebe 1 kann bevorzugt in Standardantriebsbauweise oder auch in Front-/Querbauweise in ein Fahrzeug eingebaut werden. Als Schaltelemente sind reib- und/oder formschlüssige Schaltelemente möglich. Insbesondere die zweite Bremse B2 kann als formschlüssiges, insbesondere als Klauenschaltelement ausgeführt werden, was zu deutlichen Verbrauchsvorteilen eines mit dem Getriebe versehenen Fahrzeugs mit Verbrennungsmotor führt.

Zusammenfassend bietet die vorliegende Erfindung den Vorteil, dass ein geringer Bauaufwand für das Getriebe erforderlich ist, was in niedrigeren Herstellungskosten und niedrigerem Gewicht des Getriebes resultiert. Weiter bietet das Getriebe eine gute Übersetzungsreihe, niedrige Absolut- und Relativdrehzahlen sowie niedrige Planetensatz- und Schaltelementmomente. Darüber hinaus bietet die vorliegende Erfindung gute Verzahnungswirkungsgrade, eine hohe Anzahl von Gängen sowie geringe Schleppmomente. Obwohl die vorliegende Erfindung vorstehend anhand bevorzugter Ausführungsbeispiele beschrieben wurde, ist sie nicht darauf beschränkt sondern auf vielfältige Weise modifizierbar.

So kann beispielsweise die geometrische Lage/Reihenfolge der einzelnen Planetenradsätze und der einzelnen Schaltelemente unter Berücksichtigung der Bindbarkeit der jeweiligen Getriebeelemente untereinander frei gewählt werden. Einzelne Getriebeelemente können so beliebig in ihrer Lage innerhalb des Getriebes verschoben werden. Weiterhin ist es möglich unter Berücksichtigung der Bindbarkeit, einzelne oder mehrere als Minusplanetenradsatz ausgebildete Planetenradsätze in Plus-/Minusplanetenradsätze umzuwandeln, bei gleichzeitiger Vertauschung von Steg- und Hohlradanbindungen und eine Erhöhung Standübersetzung um 1.

### Bezugszeichen

- 1: Getriebe
- GP1, GP2, GP3, GP4: Planetenradsatz
- 101, 102, 103, 104: Sonnenrad
- 111, 112, 113, 114: Planetenrad
- 121, 122, 123, 124: Steg
- 131, 132, 133, 134: Hohlrad
- ANW: Antriebswelle
- AW: Abtriebswelle
- B1, B2,: Bremse
- K1, K2, K3, K4: Kupplung
- G: Gehäuse
- V1, V2, V3, V4, V5, V6, V7, V8, V9, V10: Vorwärtsgang
- M1, M2: Alternativer Vorwärtsgang
- R: Rückwärtsgang
- i: Übersetzung
- ϕ: Gangsprung

## Patentansprüche

1. Getriebe (1), insbesondere Mehrstufengetriebe, für ein Kraftfahrzeug, umfassend ein Gehäuse (G), eine Antriebswelle (ANW), eine Abtriebswelle (AW), zumindest vier Planetenradsätze (GP1, GP2, GP3, GP4), wobei die Planetenradsätze (GP1, GP2, GP3, GP4) jeweils ein Sonnenrad (101,102, 103, 104), einen Planeten (111,112, 113,114), einen Planetenträger (121,122,123, 124) und ein Hohlrad (131, 132, 133, 134) aufweisen, sowie mehrere Schaltelemente (K1, K2, K3, K4, B1, B2) in Form von zumindest vier Kupplungen (K1, K2, K3, K4) und zumindest zwei Bremsen (B1, B2), **dadurch gekennzeichnet, dass**
- die Antriebswelle (ANW) mit dem Planetenträger (122) des zweiten Planetenradsatz verbunden ist,
- die Antriebswelle (ANW) über die erste Kupplung (K1) mit dem Sonnenrad (104) des vierten Planetenradsatzes (GP4) verbindbar ist,
- das Sonnenrad (101) des ersten Planetenradsatzes (GP1) mit dem Sonnenrad (102) des zweiten Planetenradsatzes (GP2) und der ersten Bremse (B1) verbunden ist,
- der Planetenträger (121) des ersten Planetenradsatzes (GP1) mit dem Hohlrad (134) des vierten Planetenradsatzes (GP4) verbunden ist und über die vierte Kupplung (K4) mit dem Planetenträger (123) des dritten Planetenradsatzes (GP3) verbunden ist,
- das Hohlrad (131) des ersten Planetenradsatzes (GP1) mit einer zweiten Bremse (B2) verbunden ist,
- der Planetenträger (124) des vierten Planetenradsatzes (GP4) mit der Abtriebswelle (AW) verbunden ist,
**dadurch gekennzeichnet, dass**
- die Antriebswelle (ANW) über die erste (K1) und die dritte Kupplung (K3) mit dem Hohlrad (133) des dritten Planetenradsatzes (GP3) und über die erste Kupplung (K1), die dritte Kupplung (K3) und die zweite Kupplung (K2) mit dem Sonnenrad (123) des dritten Planetenradsatzes (GP3) und dem Hohlrad (132) des zweiten Planetenradsatzes (GP2) verbindbar ist.

2. Getriebe (1) nach dem vorhergehenden Anspruch, **dadurch gekennzeichnet, dass** die Planetenradsätze (GP1, GP2, GP3, GP4) axial betrachtet in der Reihenfolge erster Planetenradsatz (GP1), zweiter Planetenradsatz (GP2), dritter Planetenradsatz (GP3), vierter Planetenradsatz (GP4) angeordnet sind.

3. Getriebe (1) nach einem der vorhergehenden Ansprüche, **dadurch gekennzeichnet, dass** alle Planetenradsätze (GP1, GP2, GP3, GP4) Minus- Planetenradsätze sind.

4. Getriebe (1) nach einem der vorhergehenden Ansprüche, **dadurch gekennzeichnet, dass** zumindest ein Schaltelement (K1, K2, K3, K4, B1, B2), insbesondere die zweite Bremse (B2) als formschlüssiges Schaltelement ausgebildet ist.

5. Getriebe (1) nach einem der vorhergehenden Ansprüche, **dadurch gekennzeichnet, dass** das Getriebe (1) zur Drehmomentübertragung zwischen den Planetenradsätze (GP1, GP2, GP3, GP4) Wellen aufweist und mit zumindest einer der Wellen ein Antrieb, wie ein Elektromotor, verbunden ist.

6. Getriebe (1) nach einem der vorhergehenden Ansprüche **dadurch gekennzeichnet, dass** zumindest eine der Wellen mit einem Freilauf verbunden ist, welcher mit einer weiteren Welle und/oder dem Gehäuse verbunden ist.

7. Getriebe (1) nach einem der vorhergehenden Ansprüche **dadurch gekennzeichnet, dass** durch das Getriebe zumindest zehn Gangstufen, insbesondere genau zehn Gangstufen, darstellbar sind.

8. Verfahren zum Betreiben eines Getriebes (1) nach einem der vorhergehenden Ansprüche, **dadurch gekennzeichnet, dass**
- ein erster Gang (V1) mittels geschlossener erster Bremse (B1), geschlossener zweiter Bremse (B2), geschlossener erster Kupplung (K1), geschlossener dritter Kupplung (K3) gebildet wird und/oder mittels geschlossener erster Bremse (B1), geschlossener zweiter Bremse (B2), geschlossener erster Kupplung (K1) geschlossener vierter Kupplung (K4) gebildet wird und/oder mittels geschlossener erster Bremse (B1), geschlossener zweiter Bremse (B2), geschlossener erster Kupplung (K1), geschlossener zweiter Kupplung (K2) gebildet wird,
- ein zweiter Gang (V2) mittels geschlossener erster Bremse (B1), geschlossener zweiter Bremse (B2), geschlossener zweiter Kupplung (K2) geschlossener dritte Kupplung (K3) gebildet wird,
- ein dritter Gang (V3) mittels geschlossener zweiter Bremse (B2), geschlossener erster Kupplungen (K1), geschlossener zweiter Kupplung (K2), geschlossener dritte Kupplung (K3) gebildet wird,
- ein vierter Gang (V4) mittels geschlossener zweiter Bremse (B2), geschlossener zweiter Kupplung (K2), geschlossener dritte Kupplung (K3), geschlossener vierte Kupplung (K4) gebildet wird,
- einen fünfter Gang (V5) mittels geschlossener zweiter Bremse (B2), geschlossener erster Kupplung (K1), geschlossener zweiter Kupplung (K2) und geschlossener vierter Kupplung (K4) gebildet wird,
- ein sechster Gang (V6) mittels geschlossener zweiter Bremse (B2), geschlossener erster Kupplung (K1), geschlossener dritter Kupplung (K3) und geschlossener vierter Kupplung (K4) gebildet wird,
- ein siebter Gang (V7) mittels geschlossener erster Kupplung (K1), geschlossener zweiter Kupplung (K2), geschlossener dritter Kupplung (K3) und geschlossener vierter Kupplung (K4) gebildet wird,
- ein achter Gang (V8) mittels geschlossener erster Bremse (B1), geschlossener erster Kupplung (K1), geschlossener dritter Kupplung (K3) und geschlossener vierter Kupplung (K4) gebildet wird,
- ein neunter Gang (V9) mittels geschlossener erster Bremse (B1), geschlossener erster Kupplung (K1), geschlossener zweiter Kupplung (K2) und geschlossener vierter Kupplung (K4) gebildet wird,
- ein zehnter Gang (V10) mittels geschlossener erster Bremse (B1), geschlossener zweiten Kupplung (K2), geschlossener dritten Kupplung (K3), geschlossener vierten Kupplung (K4) gebildet wird,
- einen Rückwärtsgang (VR) mittels geschlossener ersten Bremse (B1), geschlossener zweiten Bremse (B2), geschlossener dritter Kupplung (K3) und geschlossener vierten Kupplung (K4) gebildet wird.

9. Kraftfahrzeug, insbesondere ein Personen- oder ein Lastkraftwagen, mit einem Getriebe (1) gemäß einem der Ansprüche 1-7.

10. Verwendung eines Getriebes (1) nach Anspruch 1 bis 7 oder eines Verfahrens nach Anspruch 8 in einem Kraftfahrzeug, einem Personenkraftfahrzeug, einer Baumaschine und/oder einem Lastkraftfahrzeug.

## Claims

1. Transmission (1), in particular multiple-stage transmission, for a motor vehicle, comprising a housing (G), a drive shaft (ANW), an output shaft (AW), at least four planetary gear stages (GP1, GP2, GP3, GP4), the planetary gear stages (GP1, GP2, GP3, GP4) in each case having a sun gear (101, 102, 103, 104), a planet (111, 112, 113, 114), a planetary carrier (121, 122, 123, 124) and an internal gear (131, 132, 133, 134), and a plurality of shifting elements (K1, K2, K3, K4, B1, B2) in the form of at least four clutches (K1, K2, K3, K4) and at least two brakes (B1, B2),
**characterized in that**
- the drive shaft (ANW) is connected to the planetary carrier (122) of the second planetary gear set,
- the drive shaft (ANW) can be connected via the first clutch (K1) to the sun gear (104) of the fourth planetary gear set (GP4),
- the sun gear (101) of the first planetary gear set (GP1) is connected to the sun gear (102) of the second planetary gear set (GP2) and the first brake (B1),
- the planetary carrier (121) of the first planetary gear set (GP1) is connected to the internal gear (134) of the fourth planetary gear set (GP4), and is connected via the fourth clutch (K4) to the planetary carrier (123) of the third planetary gear set (GP3),
- the internal gear (131) of the first planetary gear set (GP1) is connected to a second brake (B2),
- the planetary carrier (124) of the fourth planetary gear set (GP4) is connected to the output shaft (AW), **characterized in that**
- the drive shaft (ANW) can be connected via the first (K1) and the third clutch (K3) to the internal gear (133) of the third planetary gear set (GP3) and via the first clutch (K1), the third clutch (K3) and the second clutch (K2) to the sun gear (123) of the third planetary gear set (GP3) and the internal gear (132) of the second planetary gear set (GP2).

2. Transmission (1) according to the preceding claim, **characterized in that** the planetary gear sets (GP1, GP2, GP3, GP4) are arranged, as viewed axially, in the following sequence: first planetary gear set (GP1), second planetary gear set (GP2), third planetary gear set (GP3), fourth planetary gear set (GP4).

3. Transmission (1) according to either of the preceding claims, **characterized in that** all the planetary gear sets (GP1, GP2, GP3, GP4) are negative planetary gear sets.

4. Transmission (1) according to one of the preceding claims, **characterized in that** at least one shifting element (K1, K2, K3, K4, B1, B2), in particular the second brake (B2), is configured as a positively locking shifting element.

5. Transmission (1) according to one of the preceding claims, **characterized in that** the transmission (1) has shafts for the transmission of torque between the planetary gear sets (GP1, GP2, GP3, GP4), and a drive, such as an electric motor, is connected to at least one of the shafts.

6. Transmission (1) according to one of the preceding claims, **characterized in that** at least one of the shafts is connected to a freewheel which is connected to a further shaft and/or the housing.

7. Transmission (1) according to one of the preceding claims, **characterized in that** at least ten gear stages, in particular precisely ten gear stages, can be produced by way of the transmission.

8. Method for operating a transmission (1) according to one of the preceding claims, **characterized in that**
- a first gear (V1) is formed by means of a closed first brake (B1), a closed second brake (B2), a closed first clutch (K1) and a closed third clutch (K3), and/or is formed by means of a closed first brake (B1), a closed second brake (B2), a closed first clutch (K1) and a closed fourth clutch (K4), and/or is formed by means of a closed first brake (B1), a closed second brake (B2), a closed first clutch (K1) and a closed second clutch (K2),
- a second gear (V2) is formed by means of a closed first brake (B1), a closed second brake (B2), a closed second clutch (K2) and a closed third clutch (K3),
- a third gear (V3) is formed by means of a closed second brake (B2), a closed first clutch (K1), a closed second clutch (K2) and a closed third clutch (K3),
- a fourth gear (V4) is formed by means of a closed second brake (B2), a closed second clutch (K2), a closed third clutch (K3) and a closed fourth clutch (K4),
- a fifth gear (V5) is formed by means of a closed second brake (B2), a closed first clutch (K1), a closed second clutch (K2) and a closed fourth clutch (K4),
- a sixth gear (V6) is formed by means of a closed second brake (B2), a closed first clutch (K1), a closed third clutch (K3) and a closed fourth clutch (K4),
- a seventh gear (V7) is formed by means of a closed first clutch (K1), a closed second clutch (K2), a closed third clutch (K3) and a closed fourth clutch (K4),
- an eighth gear (V8) is formed by means of a closed first brake (B1), a closed first clutch (K1), a closed third clutch (K3) and a closed fourth clutch (K4),
- a ninth gear (V9) is formed by means of a closed first brake (B1), a closed first clutch (K1), a closed second clutch (K2) and a closed fourth clutch (K4),
- a tenth gear (V10) is formed by means of a closed first brake (B1), a closed second clutch (K2), a closed third clutch (K3) and a closed fourth clutch (K4), and
- a reverse gear (VR) is formed by means of a closed first brake (B1), a closed second brake (B2), a closed third clutch (K3) and a closed fourth clutch (K4).

9. Motor vehicle, in particular a passenger car or a lorry, with a transmission (1) according to one of Claims 1 to 7.

10. Use of a transmission (1) according to Claims 1 to 7 or of a method according to Claim 8 in a motor vehicle, a passenger motor vehicle, a construction machine and/or a lorry.

## Revendications

1. Transmission (1), en particulier transmission à plusieurs étages, pour un véhicule à moteur, comprenant un carter (G), un arbre d'entraînement (ANW), un arbre entraîné (AW), au moins quatre trains planétaires (GP1, GP2, GP3, GP4), les trains planétaires (GP1, GP2, GP3, GP4) comprenant chacun une roue solaire (101, 102, 103, 104), un engrenage planétaire (111, 112, 113, 114), un support planétaire (121, 122, 123, 124) et une couronne (131, 132, 133, 134), ainsi que plusieurs éléments de commutation (K1, K2, K3, K4, B1, B2) sous la forme d'au moins quatre embrayages (K1, K2, K3, K4) et d'au moins deux freins (B1, B2), **caractérisée en ce que**
- l'arbre d'entraînement (ANW) est raccordé avec le support planétaire (122) du deuxième train planétaire,
- l'arbre d'entraînement (ANW) peut être raccordé par l'intermédiaire du premier embrayage (K1) avec la roue solaire (104) du quatrième train planétaire (GP4),
- la roue solaire (101) du premier train planétaire (GP1) est raccordée avec la roue solaire (102) du deuxième train planétaire (GP2) et le premier frein (B1),
- le support planétaire (121) du premier train planétaire (GP1) est raccordé avec la couronne (134) du quatrième train planétaire (GP4) et est raccordé par l'intermédiaire du quatrième embrayage (K4) avec le support planétaire (123) du troisième train planétaire (GP3),
- la couronne (131) du premier train planétaire (GP1) est raccordée avec un deuxième frein (B2),
- le support planétaire (124) du quatrième train planétaire (GP4) est raccordé avec l'arbre entraîné (AW),
**caractérisée en ce que**
- l'arbre d'entraînement (ANW) peut être raccordé par l'intermédiaire du premier (K1) et du troisième embrayage (K3) avec la couronne (133) du troisième train planétaire (GP3), et par l'intermédiaire du premier embrayage (K1), du troisième embrayage (K3) et du deuxième embrayage (K2) avec la roue solaire (123) du troisième train planétaire (GP3) et la couronne (132) du deuxième train planétaire (GP2).

2. Transmission (1) selon la revendication précédente, **caractérisée en ce que** les trains planétaires (GP1, GP2, GP3, GP4) sont agencés axialement dans l'ordre premier train planétaire (GP1), deuxième train planétaire (GP2), troisième train planétaire (GP3), quatrième train planétaire (GP4).

3. Transmission (1) selon l'une quelconque des revendications précédentes, **caractérisée en ce que** tous les trains planétaires (GP1, GP2, GP3, GP4) sont des trains planétaires négatifs.

4. Transmission (1) selon l'une quelconque des revendications précédentes, **caractérisée en ce qu'**au moins un élément de commutation (K1, K2, K3, K4, B1, B2), notamment le deuxième frein (B2), est configuré sous la forme d'un élément de commutation à accouplement de forme.

5. Transmission (1) selon l'une quelconque des revendications précédentes, **caractérisée en ce que** la transmission (1) comprend des arbres pour le transfert de moment de rotation entre les trains planétaires (GP1, GP2, GP3, GP4) et un entraînement, tel qu'un moteur électrique, est raccordé avec au moins un des arbres.

6. Transmission (1) selon l'une quelconque des revendications précédentes, **caractérisée en ce qu'**au moins un des arbres est raccordé avec une roue libre, qui est raccordée avec un arbre supplémentaire et/ou avec le carter.

7. Transmission (1) selon l'une quelconque des revendications précédentes, **caractérisée en ce qu'**au moins dix étages de vitesse, notamment exactement dix étages de vitesse, peuvent être représentés par la transmission.

8. Procédé d'exploitation d'une transmission (1) selon l'une quelconque des revendications précédentes, **caractérisé en ce que**
- une première vitesse (V1) est formée au moyen d'un premier frein fermé (B1), d'un deuxième frein fermé (B2), d'un premier embrayage fermé (K1), d'un troisième embrayage fermé (K3) et/ou au moyen d'un premier frein fermé (B1), d'un deuxième frein fermé (B2), d'un premier embrayage fermé (K1), d'un quatrième embrayage fermé (K4) et/ou au moyen d'un premier frein fermé (B1), d'un deuxième frein fermé (B2), d'un premier embrayage fermé (K1), d'un deuxième embrayage fermé (K2),
- une deuxième vitesse (V2) est formée au moyen d'un premier frein fermé (B1), d'un deuxième frein fermé (B2), d'un deuxième embrayage fermé (K2), d'un troisième embrayage fermé (K3),
- une troisième vitesse (V3) est formée au moyen d'un deuxième frein fermé (B2), d'un premier embrayage fermé (K1), d'un deuxième embrayage fermé (K2), d'un troisième embrayage fermé (K3),
- une quatrième vitesse (V4) est formée au moyen d'un deuxième frein fermé (B2), d'un deuxième embrayage fermé (K2), d'un troisième embrayage fermé (K3), d'un quatrième embrayage fermé (K4),
- une cinquième vitesse (V5) est formée au moyen d'un deuxième frein fermé (B2), d'un premier embrayage fermé (K1), d'un deuxième embrayage fermé (K2) et d'un quatrième embrayage fermé (K4),
- une sixième vitesse (V6) est formée au moyen d'un deuxième frein fermé (B2), d'un premier embrayage fermé (K1), d'un troisième embrayage fermé (K3) et d'un quatrième embrayage fermé (K4),
- une septième vitesse (V7) est formée au moyen d'un premier embrayage fermé (K1), d'un deuxième embrayage fermé (K2), d'un troisième embrayage fermé (K3) et d'un quatrième embrayage fermé (K4),
- une huitième vitesse (V8) est formée au moyen d'un premier frein fermé (B1), d'un premier embrayage fermé (K1), d'un troisième embrayage fermé (K3) et d'un quatrième embrayage fermé (K4),
- une neuvième vitesse (V9) est formée au moyen d'un premier frein fermé (B1), d'un premier embrayage fermé (K1), d'un deuxième embrayage fermé (K2) et d'un quatrième embrayage fermé (K4),
- une dixième vitesse (V10) est formée au moyen d'un premier frein fermé (B1), d'un deuxième embrayage fermé (K2), d'un troisième embrayage fermé (K3), d'un quatrième embrayage fermé (K4),
- une marche arrière (VR) est formée au moyen d'un premier frein fermé (B1), d'un deuxième frein fermé (B2), d'un troisième embrayage fermé (K3) et d'un quatrième embrayage fermé (K4).

9. Véhicule à moteur, notamment voiture individuelle ou camion, comprenant une transmission (1) selon l'une quelconque des revendications 1 à 7.

10. Utilisation d'une transmission (1) selon les revendications 1 à 7 ou d'un procédé selon la revendication 8 dans un véhicule à moteur, une voiture particulière, une machine de construction et/ou un camion.
